# EUROPEAN PATENT APPLICATION

(11) **EP 1 058 446 A2**
(43) Date of publication of application: **06.12.2000**
(21) Application number: 00304356.9
(22) Date of filing: 23.05.2000
(51) Int. Cl.: H04M 3/533

(54) **Key segment spotting in voice messages**

(30) Priority: 03.06.1999 US 325143
(71) Applicant: LUCENT TECHNOLOGIES INC., Murray Hill, New Jersey 07974-0636 (US)
(72) Inventor: Lee, Chin-Hui, Basking Ridge, N.J. 09720 (US); Ramesh, Padma, New Provedence, N.J. 07974 (US)
(74) Representative: Buckley, Christopher Simon Thirsk

(57) **Abstract**

A method and system of identifying and spotting segments containing key information in voice messages. The method can be used to spot a key segment such as a name segment in a voice message by detecting and verifying the presence of a phrase such as "My name is ..." or "This is ...". Once the key segment of interest has been spotted, the method provides the user with only the pertinent information (e.g., the name of the caller), which is contained in the key segment. This allows a user retrieving a message to hear just a desired section or sections of a message without listening to the rest of the message.

## Description

### Related Applications

The present application is related to U.S. Patent Application Serial No. (Attorney Docket No. Lee 23-2), entitled VOICE MESSAGE FILTERING FOR CLASSIFICATION OF VOICE MESSAGE ACCORDING TO CALLER, filed on even date herewith and incorporated herein by reference in its entirety.

### Field Of The Invention

The present invention relates to voice messaging systems and methods, in particular, key segment spotting in voice messages.

### Background Information

In voice messaging (or "voice-mail") systems, a user is often forced to listen to multiple, often lengthy messages to obtain certain items of essential information such as the names of the callers who have left the messages and the callers' return telephone numbers. This can be a tedious and time-consuming process. Furthermore, the manual process of transcribing the essential information is susceptible to errors.

### Summary Of The Invention

The present invention is directed to a method and system of identifying and spotting segments containing key information in voice messages. For example, the method of the present invention can be used to spot a name segment in a voice message by detecting and verifying the presence of a segment such as "My name is ..." or "This is ...". The method can also be used to spot a phone number segment by detecting and verifying the presence of a segment such as "My number is ..." or "Call me back at ..." or by spotting the numerical part of the message such as "[my number is] 3-6-4-7-5-8-9". Once the key segment of interest has been spotted, the method or system of the present invention can provide the user with only the pertinent information (e.g., the name of the caller) contained in the key segment. The method of the present invention can spot the key segments and can then retrieve only the desired segments. This allows a user retrieving a message to hear just a desired section or sections of a message without having to listen to the rest of the message.

The method of the present invention is advantageously useful in sorting through a large number of voice mail messages. The method speeds up the process of searching for particular messages, messages from particular callers, or for certain segments within messages.

### Brief Description Of The Drawing

FIG. 1 illustrates a key segment registration procedure in accordance with the present invention.

FIG. 2 illustrates the handling of voice messages in accordance with the present invention.

FIG. 3 illustrates the retrieval of key segments and messages with key segments, in accordance with the present invention.

### Detailed Description

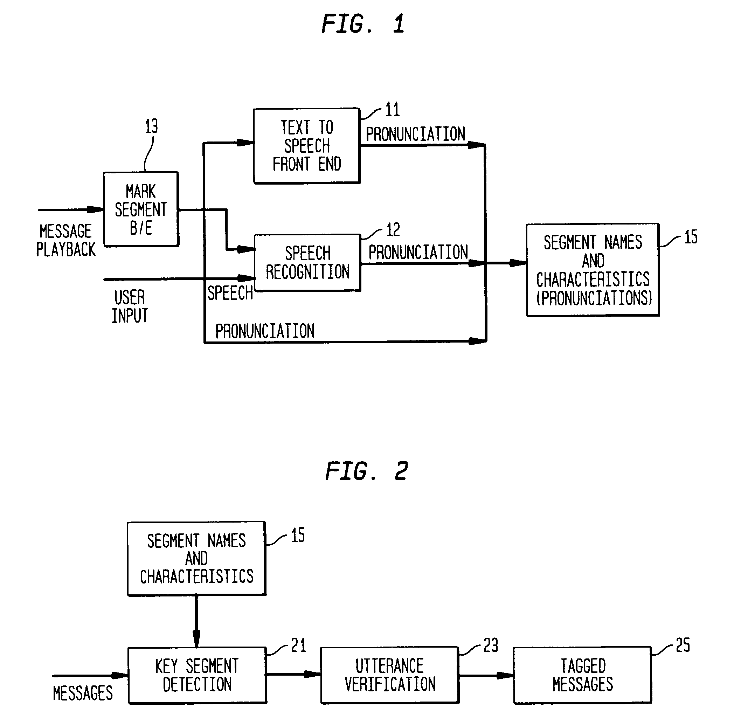

In an exemplary embodiment of a method in accordance with the present invention, key segment spotting is achieved by first having a user register the key segments he would like to spot in the messages. This procedure is illustrated in FIG. 1. As shown, the registration of key segments can be done by text input (e.g., if a keyboard is available, the user can type in the key segment to be registered) or by voice input (e.g., the user speaks the key segment to be registered).

Also, the user may register a key segment by using part of an actual voice message. As shown in FIG. 1, a user, while playing back a stored voice message, can mark at 13 a key segment within the message, by pressing, for example, the "B" key to mark the beginning of the key segment and the 'E" key to mark the end of the key segment. By pressing a further key sequence, e.g., **S, the user can indicate that the marked segment, delimited with the B and E key presses, is to be registered. This feature is useful, for example, for saving the names of the message sender as spoken by the senders in order to spot them later.

Commonly occurring key segments such as name segments, phone number segments and date segments may be provided without registration as predefined segments. As discussed below, such predefined segments can be retrieved by pressing predefined key sequences.

As shown in FIG. 1, the user can input a key segment to be registered either as text, speech, pronunciation or by marking a segment within a message. Text can be entered, for example, with an alphanumeric key pad (not shown), keyboard or any other such text-entry device. A speech representation of a key segment can be entered, for example, via the audio path of a telephone (such as the user might use to dial into the system of the present invention.) The pronunciation can be specified using any set of symbols, such as the IPA symbol set. The symbols can be entered, for example, as text.

If entered as text, the text of the key segment is processed at 11 through a text-to-speech front end to obtain the pronunciation of the key segment. For example, if the user enters the word "four", the text-to-speech front end would generate the IPA symbol sequence f-ow-r to represent the pronunciation. If the user speaks the key segment or marks the key segment in a message, the key segment is processed at 12 to generate its pronunciation using speech recognition.

An identifier of the key segment (e.g., a segment name) and the corresponding characteristics (e.g., the pronunciation) of the key segment are stored at 15 in a storage device or memory. The text-to-speech and speech recognition functions can be implemented in conventional ways using known methods and systems. For example, the speech recognition function 12 can be implemented in accordance with the methods and systems described in U.S. Patents Nos. 4,713,777, 4,718,088, 5,509,104, 5,579,436, and/or 5,649,057. The text-to-speech function can be implemented as described in "Multilingual Text-to-Speech Synthesis: The Sell Labs Approach," by R. W. Sproat, Kluwer Academic Publishers, 1998.

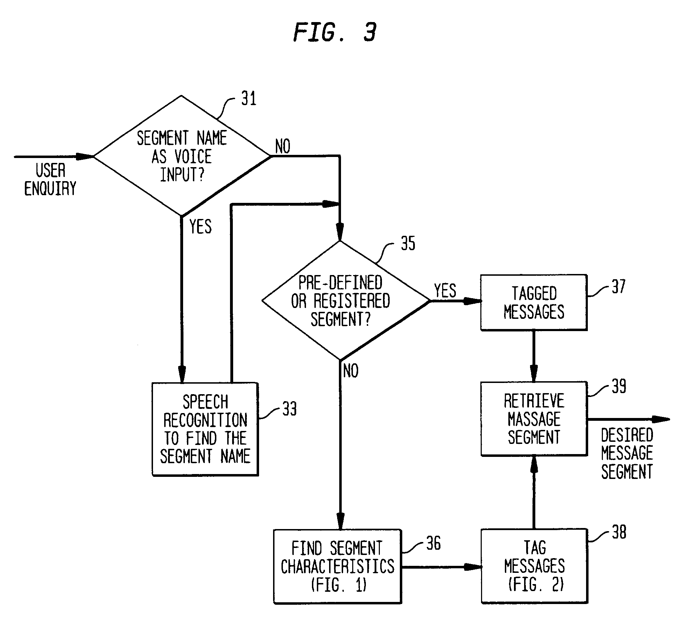

As voice messages are received, the messages are processed as illustrated in FIG. 2 in order to search for registered and/or predefined key segments. Using the key segment characteristics stored at 15 and speaker-independent models (for the sound units of the pronunciation) key segment detection is performed at 21 to spot one or more registered or predefined key segments in a voice message. The key segment detection at 21 can be implemented in a known way using conventional wordspotting or phrase detection technology, such as described in U.S. Patent No. 5,509,104.

To enhance the accuracy of the key segment detection, utterance verification is performed at 23 on the key segments detected at 21. Utterance verification is used to confirm that the segments detected at 21 contain the information that is sought. Utterance verification can be performed as described, for example, in U.S. Patent No. 5,675,706. The messages are then tagged at 25 with the key segments and the locations of the key segments in the messages to facilitate their later retrieval. In one exemplary embodiment, each message is stored with a header containing tag information. The tag information, for example, may indicate the locations of key segments detected within the message. The location of each key segment can be represented, for example, as an offset in time or address space from the beginning of the message.

Messages in which no registered or predefined key segments are detected can be stored in a conventional manner without being tagged and can be retrieved in a conventional manner.

Once one or more messages have been tagged and stored, the messages and/or key segments within the messages can be retrieved. An exemplary message retrieval procedure in accordance with the present invention is illustrated in FIG. 3.

The retrieval procedure is initiated when a user enters an enquiry for a key segment. The enquiry can be entered by a variety of means, including speech (i.e., speaking the desired key segment), by typing the name or pronunciation of the key segment, or by pressing a sequence of one or more buttons on a keypad, wherein the sequence identifies the desired key segment.

Upon receiving the user enquiry for a key segment, the procedure first determines at 31 whether the user has entered the enquiry by speech, i.e., if the user has spoken the name of the key segment. If so, operation proceeds to 33 in which speech recognition is performed on the spoken enquiry to determine the segment name spoken.

Operation then proceeds to 35 in which it is determined if the specified key segment is one that has been predefined or already registered. If the key segment to which the user's enquiry pertains is registered or is one of the predefined segments, operation proceeds to 37 in which a search for the specified key segment is performed in the tagged messages. At 39, the specified key segment is retrieved from those messages in which it was found. If the enquired-about key segment is found in multiple messages, each occurrence of the key segment is retrieved.

To access predefined key segments, the user may press predefined key sequences on the user's telephone dial pad, such as, **T for the telephone number segment, **N for the name segment, **D for the date segment, and so on. Furthermore, telephone number detection with **T can include number verification. A number retrieved from a segment of a message can optionally be dialed by pressing a predefined key sequence (e.g., **C).

If it is determined at 35 that the key segment to which the user's enquiry pertains is a new key segment (i.e., it is not a predefined or registered segment), the characteristics (e.g., pronunciation) of the key segment are first obtained at 36 with the procedure of FIG. 1. The stored messages are then tagged at 38, as per the message handler procedure of FIG. 2, to indicate where, if at all, the newly specified key segment is found in the stored messages. Once the messages have been tagged with respect to the new key segment, the key segment is retrieved at 39, as described above.

When a key segment is retrieved at 39 from a message, the user can opt to save the retrieved key segment for future use as a key segment by pressing a predefined sequence of keys (e.g., **S). Furthermore, if a name segment is retrieved, it can be used to identify the caller and hence can be used for message filtering and classification of messages according to the caller. This enables the system of the present invention to save for example, the message sender's name in their own voice for later use in identifying, tagging and retrieving the sender's messages.

The present invention uses speech recognition, wordspotting, key-word detection and utterance verification technologies for spotting key segments in messages. It can also use speech coding technology for key segment spotting in coded voice mail messages.

The present invention can be implemented as part of a voice messaging system, such as the AUDIX system, available from Lucent Technologies, Inc. The present invention can be implemented on a general purpose computer with software or with special purpose hardware.

## Claims

1. A method of spotting a key segment in a voice message comprising the steps of:
identifying a key segment;
receiving a voice message;
detecting the key segment in the voice message;
tagging the voice message so as to indicate the location of the detected key segment within the voice message;
receiving an enquiry for the key segment; and
retrieving the key segment from the voice message.

2. The method of claim 1, wherein the step of identifying a key segment includes registering the key segment by storing an identification and a characteristic of the key segment.

3. The method of claim 1, wherein the step of identifying a key segment includes predefining the key segment.

4. The method of claim 1, wherein the enquiry for the key segment includes speech.

5. The method of claim 2, wherein the characteristic of the key segment includes a pronunciation of the key segment.

6. A method of spotting a key segment in a voice message comprising the steps of:
receiving a voice message;
receiving an enquiry for a key segment;
detecting the key segment in the voice message;
tagging the voice message with the location of the detected key segment; and
retrieving the key segment from the voice message.

7. The method of claim 6, comprising the step of registering the key segment by storing an identification and a characteristic of the key segment.

8. The method of claim 7, wherein the characteristic of the key segment includes a pronunciation of the key segment
